# EUROPÄISCHE PATENTSCHRIFT

(11) **EP 2 430 376 B1**
(45) Veröffentlichungstag und Bekanntmachung des Hinweises auf die Patenterteilung: **04.03.2015**
(21) Anmeldenummer: 10706656.5
(22) Anmeldetag: 04.03.2010
(51) Int. Cl.: F24J 2/52, H01L 31/042, F24J 2/54

(54) **MONTAGEVORRICHTUNG ZUM AUFSTELLEN VON SOLARKOLLEKTOREN, INSBESONDERE PHOTOVOLTAIKMODULEN**
ASSEMBLY DEVICE FOR INSTALLING SOLAR COLLECTORS, IN PARTICULAR PHOTOVOLTAIC MODULES
DISPOSITIF DE MONTAGE POUR L'IMPLANTATION DE COLLECTEURS SOLAIRES, EN PARTICULIER DE MODULES PHOTOVOLTAÏQUES

(30) Priorität: 19.03.2009 DE 202009001983 U
(43) Veröffentlichungstag der Anmeldung: 21.03.2012
(73) Patentinhaber: SCHÜCO International KG, 33609 Bielefeld (DE)
(72) Erfinder: WEEKE, Andreas, 32120 Hiddenhausen (DE)
(74) Vertreter: Dantz, Jan Henning
(86) Internationale Anmeldenummer: PCT/EP2010/052785
(87) Internationale Veröffentlichungsnummer: WO 2010/105919

(56) Entgegenhaltungen:
- DE-A1-102007 011 215
- DE-U1-202008 004 521

## Beschreibung

Die Erfindung betrifft eine Montagevorrichtung zur Montage von Solarkollektoren auf einem Untergrund, insbesondere auf einer Freifläche nach dem Oberbegriff des Anspruchs 1.

Eine gattungsgemäße Montagevorrichtung ist aus der DE 20 2008 005 020 U1 bekannt. Die bekannte Montagevorrichtung weist einen relativ komplizierten Aufbau aus relativ vielen und aufwendigen Bauteilen auf und ist nur von geschultem Fachpersonal montierbar.

Eine Montagevorrichtung nach dem Oberbegriff des Anspruchs 1 ist zudem aus der DE 20 2008 004 521 U1 bekannt.

Die Erfindung hat daher die Aufgabe, eine Montagevorrichtung mit einem möglichst einfachen, nur wenige und kostengünstige Teile aufweisenden Aufbau zu schaffen, die zudem einfach und schnell montierbar ist.

Die Erfindung löst diese Aufgabe durch den Gegenstand des Anspruchs 1.

Die Erfindung schafft danach zunächst eine Montagevorrichtung zur Montage von Solarkollektoren auf einem Untergrund, insbesondere auf einer Freifläche, die wenigstens eine oder vorzugsweise zwei oder mehrere Standvorrichtung(en) aufweist, die jeweils einen Basis-pfosten und einen daran schwenkbar gelagerten Schwenkträger aufweisen, der in eine zum Basispfosten winklige Lage verschwenkbar ist, wozu zwischen dem Basispfosten und dem Schwenkträger ein Schwenklager ausgebildet ist, wobei das Schwenklager eine durch einen Prägevorgang gebildete Schwenkachse im Schwenkträger oder alternativ im Basispfosten und ein korrespondierendes Achslager im Basispfosten oder alternativ im Schwenkträger aufweist.

Das durch den Prägevorgang gebildete Achslager ist kostengünstig herstellbar und erfordert bei der Montage kein Anbringen von separaten Wellen oder dgl., so dass auch die Montage vereinfacht wird. Insbesondere nach der ersten Variante des Anspruchs 1 kann der Schwenkträger einfach ohne weitere Bauteile auf das Achslager des Basispfostens aufgelegt werden, da der Schwenkträger selbst schon die Schwenkachse ausbildet.

Nach der Weiterbildung und auch als separate Erfindung zu betrachtenden Gegenstand des Anspruchs 1 ist der Schwenkträger mit Hilfe wenigstens einer Strebe oder vorzugsweise zwei Streben in einer winkligen Ausrichtung relativ zum Basispfosten arretierbar. Mit nur einer oder vorzugsweise zwei Streben wird der konstruktive und montageseitige Aufwand zur Arretierung des Schwenkträgers in einer gewünschten Ausrichtung auf ein Minimum reduziert. Es sind lediglich die Streben auszurichten und in einer gewünschten Position mit geeigneten Befestigungsmitteln wie Schrauben zu arretieren.

Nochmals vereinfacht wird die Montage, wenn die eine oder vorzugsweise zwei Streben bereits schwenkbar am Basispfosten vormontierbar ist bzw. sind. Sodann ist es lediglich noch notwendig, die wenigstens eine Strebe an ihrem anderen Ende am Schwenkträger zu befestigen.

Hierzu ist es vorteilhaft, wenn der Schwenkträger mit einer Mehrzahl von längs seiner Haupterstreckungsrichtung relativ zueinander versetzten Montagebohrungen zum Anbringen der wenigstens einen oder zwei Streben in verschiedenen Positionen versehen ist. Ggf. können diese mit einem Innengewinde versehen sein. Die ein Dreieck oder zwei Dreiecke bildenden Streben sichern den Schwenkträger, ohne dass die eingehängte Auflageachse zusätzlich gesichert werden muss. Ein Herausspringen des Schwenkträgers ist daher nicht möglich. Der Schwenkträger wird durch die Streben lagefixiert.

Alternativ kann der Schwenkträger mit einem oder mehreren Langlöchern zum stufonlosen Anbringen der wenigstens einen oder zwei Streben in verschiedenen Positionen versehen werden.

Nach einer besonders kostengünstigen Ausgestaltung ist die Schwenkachse durch vorzugsweise von außen nach innen an einander gegenüberliegende Wände des Schwenkträgers geprägte Ein- bzw. Ausprägungen gebildet und das Schwenkachslager durch Langlöcher oder langlochartige Aussparungen in dem Basispfosten gebildet.

Durch die geringe Bauteilestückzahl ist die Montagevorrichtung bzw. das Montagesystem sehr preiswert und kann in sehr kurzer Zeit montiert werden. Es ist insbesondere auch möglich, es mit nur einer Person zu montieren.

Weitere vorteilhafte Ausgestaltungen der Erfindung sind den übrigen Unteransprüchen zu entnehmen.

Nachfolgend wird die Erfindung anhand eines Ausführungsbeispiels unter Bezug auf die Zeichnung näher beschreiben. Es zeigt:
- Fig. 1: eine Seitenansicht einer erfindungsgemäßen Freiflächenmontagevorrichtung mit einem darauf montierten Solarkollektor;.
- Fig. 2: eine perspektivische Ansicht eines Endbereiches eines Basispfostens einer Montagevorrichtung;
- Fig.3A: eine Schnittansicht eines Endbereiches eines Schwenkträgers;
- Fig. 3B: eine Schnittansicht eines Endbereiches eines Basispfostens; und
- Fig. 4: eine perspektivische Ansicht eines Abschnitts eines Schwenkträgers.

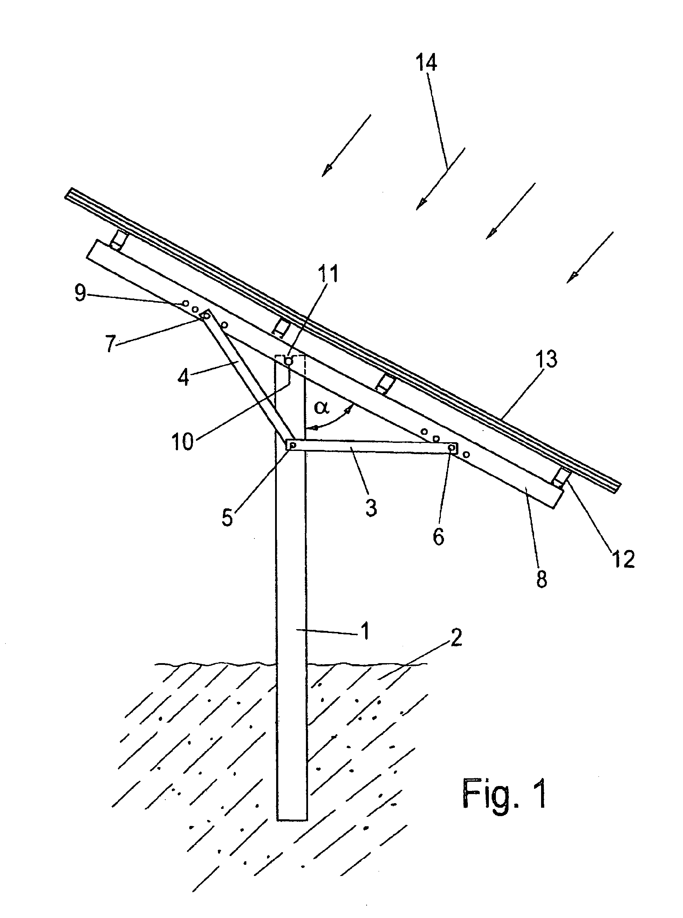

Figur 1 zeigt eine Seitenansicht einer erfindungsgemäßen Montagevorrichtung zur Montage von Solarkollektoren auf einem Untergrund, insbesondere auf einer Freifläche.

Die Montagevorrichtung weist wenigstens eine oder vorzugsweise zwei oder mehrere Standvorrichtung(en) auf, die jeweils einen vorzugsweise vertikal ausgerichteten Basispfosten 1 und einen daran schwenkbar gelagerten Schwenkträger 8 aufweisen, der in eine zum Basispfosten 1 spitzwinklige Lage verschwenkbar ist, um je nach Einsatzort jeweils die zur Sonne optimale Ausrichtung einstellen zu können.

Vorzugsweise weist die Montagevorrichtung nicht nur eine der Standvorrichtungen auf sondern zwei oder mehr zueinander in der zur Bildebene der Fig. 1 senkrechten Richtung beabstandete Standvorrichtungen.

Die Solarkollektoren werden entweder direkt auf einen der Schwenkträger oder mehrere benachbarte Schwenkträger 8 aufgelegt oder auf die Schwenkträger aufgebrachte Auflagemittel wie eine Mehrzahl von Auflage- bzw. Horizontalpfosten 12, die - wie in Fig. 1 dargestellt, Auflagemittel, vorzugsweise parallel zueinander auf den Schwenkträgern 8 senkrecht zu diesen angeordnet sind. Anstelle von Auflagepfosten 12 können auch Auflageplatten oder dgl. auf die Schwenkträger 8 aufgelegt werden. Die Auflagemittel erleichtern die Anbringung der Solarkollektoren und ermöglichten ein Anbringen der Solarkollektoren unabhängiger vom Ort und Abstand der Standvorrichtungen.

Der Basispfosten 1 ist vorzugsweise als ein vertikaler Rammpfosten ausgebildet, der dazu ausgebildet ist, in ein Erdreich 2 eingerammt zu werden.

Der Basispfosten 1 kann alternativ aber auch dazu ausgebildet sein, auf einer anders beschaffenen Freifläche wie z.B. auf einem Flachdach oder dergleichen mit entsprechenden Verankerungsmöglichkeiten wie Montagewinkeln oder dgl. montiert zu werden.

Zur Realisierung einer einfach zu montierenden, d.h. einfach aufstell- und einstellbaren Schwenkverbindung zwischen dem Basispfostens 1 und dem daran schwenkbar angeordneten Schwenkträger 8 dienen folgende Mittel.

An jedem Basispfosten 1 sind eine oder mehr, vorzugsweise zwei Streben 3 und 4 vormon-tiert angeordnet, die je an einem ihrer Enden mit einem Befestigungsmittel schwenkbar an den Basispfosten 1 angelenkt sind. Dies kann auf einfache Weise mit Hilfe einer Schraube 5 oder mit einem Bolzen 5 realisiert werden.

An ihren von dem Befestigungsmittel 5 abgewandten Enden weisen die Streben 3 und 4 Bohrungen für Befestigungsmittel 6 und 7 auf, die wiederum vorzugsweise als Schrauben oder Bolzen ausgebildet sind. Die Streben 3 und 4 können alternativ aber auch feste Bolzen oder Haken zur Befestigung aufweisen.

Die Befestigungsmittel 6 und 7 werden jeweils in einer von mehreren Bohrungen 9, die in Längsrichtung des Schwenkträgers 8 an diesem versetzt zueinander verteilt sind, befestigt. Derart ist der Winkel α zwischen dem Basispfosten 1 und dem Schwenkträger 8 in Stufen verstellbar. Durch eine unterschiedliche Positionierung der Bohrungen 9 kann der Winkel α des Schrägträgers 8 zum Basispfosten 1 derart einfachst je nach Einsatzort unterschiedlich eingestellt werden, wobei der Schwenkträger 8 relativ zum Basispfosten um eine Schwenkachse im Winkel verstellbar ist. Dieses ist erforderlich, um die auf dem Schwenkträger 8 direkt oder indirekt befestigten Kollektoren optimal zu den Sonnenstrahlen 14 ausrichten zu können. Denkbar ist es auch, in den Schwenkträger ein Langloch für die Schraube 5 einzubringen, um eine stufenlose Verstellung des Winkels α zu realisieren.

Die Montagevorrichtung weist insoweit zumindest eine Standvorrichtung mit einem Basispfosten 1, einer schwenkbar an dem Basispfosten angelenkten Strebe 3 oder vorzugsweise zwei Streben 3 und 4 und wenigstens einen Schwenkträger 8 auf. Diese Mittel sind mit drei Befestigungen 5, 6 und 7 miteinander verbunden, so dass der Basispfosten 1 mit dem Schwenkpfosten 8 in einem hier in Stufen einstellbaren Winkel α ausgerichtet sind.

Üblicherweise werden dabei eine Vielzahl von diesen Montagesystemen fluchtend in einer Ausrichtung montiert, um hierauf direkt oder indirekt Kollektoren wie z.B. Photovoltaikmodule 13 zu montieren.

Vorzugsweise werden auf mehrere Schwenkträger 8 mehrere der Horizontalträger 12 montiert, auf denen die Photovoltaikmodule 13 angeordnet sind. Hierdurch kann im Prinzip eine beliebig große Flächen von Photovoltaikmodulen montiert werden.

Die direkte Verbindung des Basispfostens 1 mit dem Schwenkträger 8 ist bei dem vorliegenden Montagesystem besonders einfach und kostengünstig umgesetzt werden.

Der Schwenkträger 8 weist hierzu eine geprägte Schwenkachse 11 auf, die ein Auflager bildet. Vorzugsweise wird die Schwenkachse mittig an dem Schwenkträger 8 ausgebildet, was die Montage und das Ausrichten relativ zum Basispfosten 1 erleichtert.

Vorzugsweise besteht der Schwenkträger 8 bevorzugt aus einem rollgeformten Stahlprofil, das bereits beim Herstellvorgang mit einer Ausprägung, welche die Schwenkachse 11 bildet, hergestellt wird. Hierdurch lassen sich erhebliche Kosten einsparen im Verhältnis zu Trägersystemen nach dem Stand der Technik, bei denen separate Achsbolzen eingesetzt werden, erzielen.

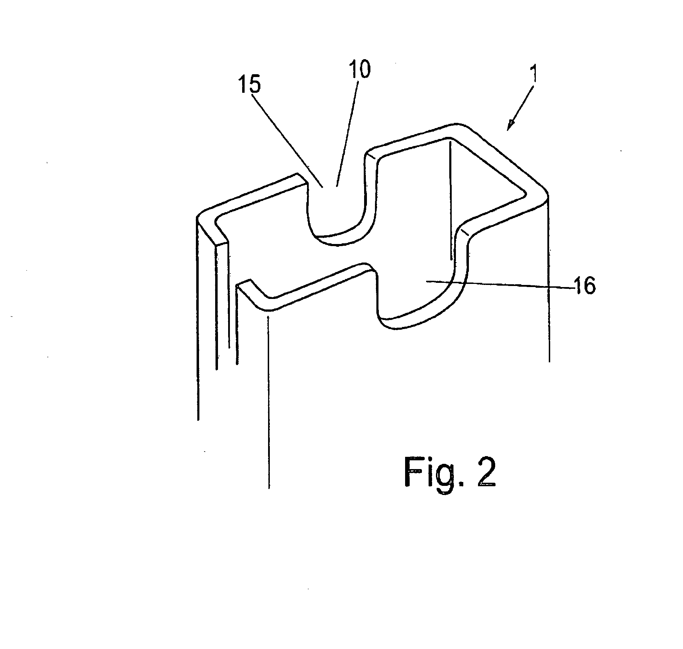

Der Basispfosten 1 selber weist an seinem oberen Ende ein Achslager 10 auf, das z.B. in Form eines Langloches auf einfache und kostengünstige Art und Weise hergestellt sein kann. Dieses ist deutlich in Figur 2 zu erkennen, die in einer vergrößerten isometrischen Teilansicht den oberen Lagerbereich des Basispfostens 1 zeigt.

Der Basispfosten 1 wird vorzugsweise ebenfalls aus einem Stahlblech im Rollfonnverfahren zu einem Profil hergestellt.

Das Achslager 10 wird gebildet aus zwei Langlöchern 15 und 16 bzw. aus Langlochbohrungen, die einen zum Radius der Schwenkachse 11 entsprechenden Radius aufweisen. Derart weist das Achslager eine nutenartige Auslegung auf.

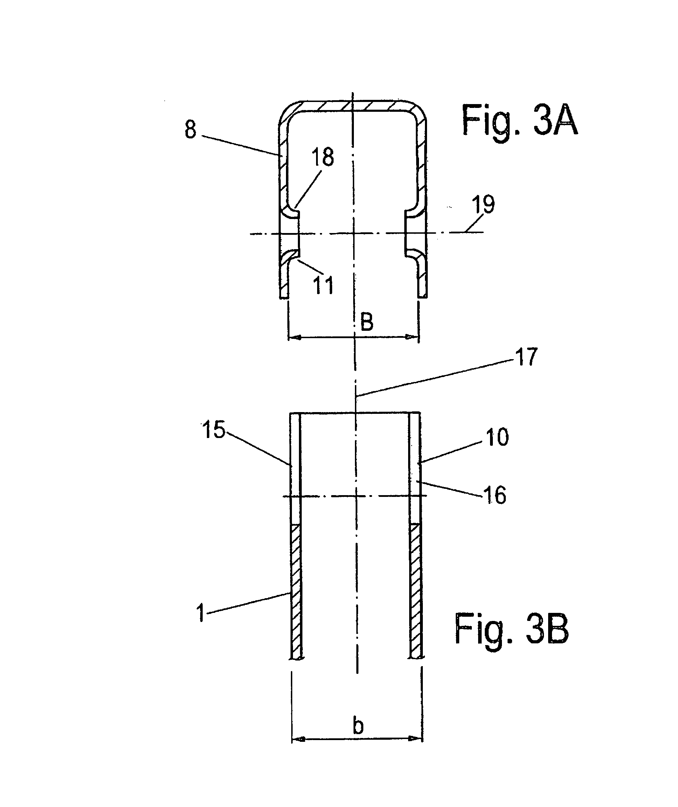

Fig. 3A zeigt einen Schnitt durch den Schwenkträger im Bereich der Schwenkachse 11.

Fig. 3B zeigt wie Fig. 2 das obere Ende des Basispfostens 1, jedoch in einer Schriittdarstellung auf Höhe des Achslagers 10. Der Basispfosten 1 weist zumindest in diesem Bereich eine Breite b auf.

In Fig. 3A sind deutlich die vorzugsweise von einander gegenüberliegenden Wänden des Schwenkträgers 1 nach innen gerichteten Ausprägungen 18 zu erkennen, welche in ihrem Zusammenspiel die Schwenkachse 11 bilden.

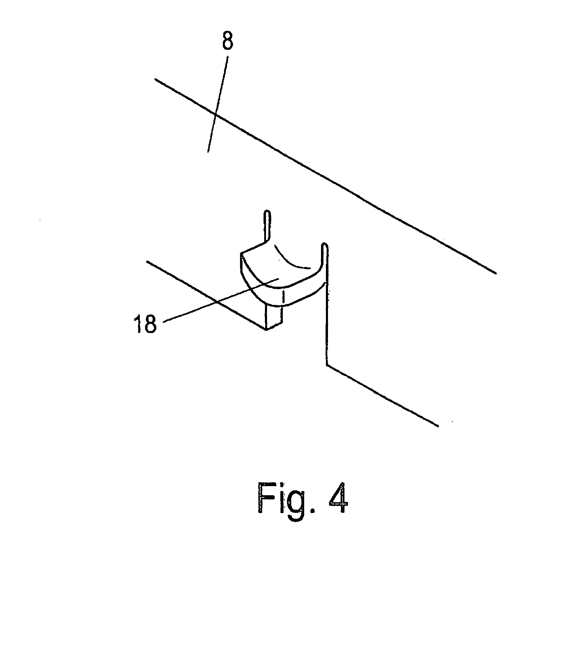

Die Ausprägungen 18 können z.B. einen runden Querschnitt aufweisen, wenn die Ausprägung mit Hilfe eines Domes hergestellt wurde. Wie die Figur 4 zeigt, sind aber auch andere Stanzprägemöglichkeiten denkbar. Nach Fig. 4 ist die Ausprägung kein umfangsgeschlossener Ring sondern lediglich einen Ringsegmentabschnitt. Auch diese Ausprägung 18 bildet dabei aber einen Teil der Schwenkachse 11 und im Zusammenspiel mit einer in Fig. 4 nicht dargestellten weiteren Ausprägung 18 an der gegenüberliegenden Seite des Basispfostens die Schwenkachse 11.

Der rollgeformte Schwenkträger 8 weist eine innere Breite B auf, die derart bemessen ist, dass sich der Schwenkträger 8 zur Montage vorzugsweise über den Basispfosten 1 stülpen lässt.

Hierbei gleiten die Ausprägungen 18 bzw. die das Auflager bildenden Schwenkachse 11 in das Achslager 10 bzw. in die Langlöcher 15 und 16. Man kann dies als eine Buchse bezeichnen, welche die Schwenkachse 11 aufnimmt. Die beiden Bauteile "Vertikalpfosten 1" und "Schwenkträger 8" bilden hierbei eine schwenkbewegliche, Last abtragende Verbindung.

Figur 4 zeigt eine alternative Ausführung der Ausprägung 18 am Schwenkträger 8. Diese ist ebenfalls durch kostengünstiges Stanzbiegen vorzugsweise während der Fertigung des Schwenkträgers 8 herstellbar.

Die erfindungsgemäße Konstruktion bietet derart einerseits den Vorteil des Einsatzes nur weniger und dazu kostengünstiger Bauteile und andererseits die Möglichkeit zu einer besonders einfachen Montage.

Vorzugsweise läuft diese Montage wie folgt ab.

Der vorgefertigte Basispfosten 1 mit den vorzugsweise bereits werksseitig beweglich befestigten vormontierten Streben 3 und 4 wird im Erdreich oder auf einer sonstigen Freifläche positioniert.

Anschließend legt der Monteur den Schwenkträger 8 auf den Basispfosten auf, und zwar so, dass die die Schwenkachse 11 bildenden Ausprägungen 18 in das Achslager 10 des Basispfostens 1 eingeführt werden.

Derart wird im Wesentlichen bereits die gesamte Last des Schwenkträgers 8 abgefangen. Daraufhin werden die Enden der Streben 3 und 4 mit dem Schwenkträger 8 an einer vorgegebenen Position, dem Sonneneinstrahlwinkel entsprechend, 6 und 7 befestigt. Der Schwenkträger 8 ist jetzt lagegesichert. Zum Schluss können die Kollektoren, ggf. unter Zuhilfenahme der Horizontalträger 13 direkt oder indirekt auf der Montagevorrichtung befestigt werden.

### Bezugsziffern:

- 1: Pfosten
- 2: Erdreich
- 3: Strebe
- 4: Strebe
- 5: Befestigung
- 6: Befestigung
- 7: Befestigung
- 8: Schwenkträger
- 9: Bohrungen
- 10: Achslager
- 11: Achse
- 12: Horizontalträger
- 13: PV-Modul
- 14: Sonnenstrahlen
- 15: Langloch
- 16: Langloch
- 17: Montageachse
- 18: Ausprägung
- 19: Achse

## Patentansprüche

1. Montagevorrichtung zur Montage von Solarkollektoren auf einem Untergrund, insbesondere auf einer Freifläche, die wenigstens eine oder vorzugsweise zwei oder mehrere Standvorrichtung(en) aufweist, die jeweils einen Basispfosten (1) und einen daran schwenkbar gelagerten Schwenkträger (8) aufweisen, der in eine zum Basispfosten winklige Lage verschwenkbar ist, wozu zwischen dem Basispfosten (1) und dem Schwenkträger (8) ein Schwenklager ausgebildet ist, **dadurch gekennzeichnet, dass** das Schwenklager eine durch einen Prägevorgang ausgebildete Schwenkachse (11) im Schwenkträger (8) oder alternativ im Basispfosten (1) und ein korrespondierendes Achslager im Basispfosten (f) oder alternativ im Schwenkträger (8) aufweist.

2. Montagevorrichtung nach Anspruch 1 oder nach dem Oberbegriff des Anspruchs 1, **dadurch gekennzeichnet, dass** der Schwenkträger mit Hilfe wenigstens einer Strebe (3, 4) oder vorzugsweise zwei Streben (3, 4) in einer winkligen Ausrichtung relativ zum Basispfostens (1) arretierbar ist.

3. Montagevorrichtung nach Anspruch 1 oder 2, **dadurch gekennzeichnet, dass** die wenigstens eine Strebe (3, 4) schwenkbar am Basispfosten (1) vormontierbar ist.

4. Montagevorrichtung nach Anspruch 3, **dadurch gekennzeichnet, dass** die wenigstens eine Strebe (3, 4) an ihren voneinander abgewandten Enden jeweils mittels einer Schraubverbindung am Basispfosten und mit ihrem anderen Ende am Schwenkträger (8) befestigt ist.

5. Montagevorrichtung nach Anspruch 3 **dadurch gekennzeichnet, dass** der Schwenkträger mit einer Mehrzahl von längs seiner Haupterstreckungsrichtung relativ zueinander versetzten Montagebohrungen zum Anbringen der wenigstens einen oder zwei Streben (3, 4) in verschiedenen Positionen versehen ist.

6. Montagevorrichtung nach Anspruch 4 oder 5, **dadurch gekennzeichnet, dass** der Schwenkträger mit einem oder mehreren Langlöchern zum Anbringen der wenigstens einen oder zwei Streben (3, 4) in verschiedenen Positionen versehen ist.

7. Montagevorrichtung nach einem der vorstehenden Ansprüche, **dadurch gekennzeichnet, dass** die Schwenkachse (11) durch vorzugsweise von außen nach innen an einender gegenüberliegende Wände des Schwenkträgers (8) geprägte Einprägungen gebildet ist.

8. Montagevorrichtung nach einem der vorstehenden Ansprüche, **dadurch gekennzeichnet, dass** der Basispfosten (1) Langlöcher oder langlochartige Aussparungen aufweist, welche das Schwenkachslager ausbilden.

9. Montagevorrichtung nach einem der vorstehenden Ansprüche, **dadurch gekennzeichnet, dass** der Basispfosten (1) als Rammpfosten zum Einrammen in ein Erdreich ausgebildet ist.

10. Montagevorrichtung nach einem der vorstehenden Ansprüche, **dadurch gekennzeichnet, dass** der Basispfosten (1) und/oder der Schwenkträger (8) als rollgeformte Stahlprofile ausgebildet sind.

## Claims

1. An installation device for installing solar collectors on an underlying surface, in particular on a free surface, which has at least one or preferably two or more stand device(s), which each have a base post (1) and a pivot carrier (8) mounted pivotably thereon, which is pivotable into a location angled to the base post, for which purpose a pivot bearing is implemented between the base post (1) and the pivot carrier (8), **characterized in that** the pivot bearing has a pivot axis (11), which is implemented by an embossing procedure, in the pivot carrier (8) or alternatively in the base post (1) and a corresponding axial bearing in the base post (1) or alternatively in the pivot carrier (8).

2. The installation device according to Claim 1 or according to the preamble of Claim 1, **characterized in that** the pivot carrier can be locked in an angled alignment relative to the base post (1) with the aid of at least one strut (3, 4) or preferably two struts (3, 4).

3. The installation device according to Claim 1 or 2, **characterized in that** the at least one strut (3, 4) can be preinstalled pivotably on the base post (1).

4. The installation device according to Claim 3, **characterized in that** the at least one strut (3, 4) is fastened at the ends thereof facing away from one another respectively using a screw connection on the base post and using the other end thereof on the pivot carrier (8).

5. The installation device according to Claim 3, **characterized in that** the pivot carrier is provided with a plurality of mounting boreholes, which are offset relative to one another along the main extension direction thereof, for attaching the at least one or two struts (3, 4) in various positions.

6. The mounting device according to Claim 4 or 5, **characterized in that** the pivot carrier is provided with one or more oblong holes for attaching the at least one or two struts (3, 4) in various positions.

7. The installation device according to one of the preceding claims, **characterized in that** the pivot axis (11) is formed by embossments, which are preferably embossed from the outside to the inside on opposing walls of the pivot carrier (8).

8. The installation device according to one of the preceding claims, **characterized in that** the base post (1) has oblong holes or recesses like oblong holes, which form the pivot axial bearing.

9. The installation device according to one of the preceding claims, **characterized in that** the base post (1) is implemented as a rammed post to be driven into soil.

10. The installation device according to one of the preceding claims, **characterized in that** the base post (1) and/or the pivot carrier (8) are implemented as roll-formed steel profiles.

## Revendications

1. Dispositif de montage servant au montage de collecteurs solaires sur un support, en particulier sur une surface dégagée, qui présente au moins un ou de préférence deux ou plusieurs dispositifs de soutien, lesquels présentent respectivement un poteau de base (1) et un support pivotant (8) logé de manière à pouvoir pivoter au niveau dudit poteau de base, ledit support pivotant pouvant pivoter dans une position de manière à former un angle avec le poteau de base, un palier pivotant étant réalisé à cet effet entre le poteau de base (1) et le support pivotant (8), **caractérisé en ce que** le palier pivotant présente dans le support pivotant (8) ou en variante dans le poteau de base (1) un axe de pivotement (11) réalisé par un processus d'estampage, et dans le poteau de base (1) ou en variante dans le support pivotant (8), un palier d'axe correspondant.

2. Dispositif de montage selon la revendication 1 ou selon le préambule de la revendication 1, **caractérisé en ce que** le support pivotant peut être bloqué dans une orientation angulaire par rapport au poteau de base (1) à l'aide d'au moins une entretoise (3, 4) ou de préférence à l'aide de deux entretoises (3, 4).

3. Dispositif de montage selon la revendication 1 ou 2, **caractérisé en ce que** l'entretoise (3, 4) au moins au nombre de une est préalablement montée de manière à pouvoir pivoter au niveau du poteau de base (1).

4. Dispositif de montage selon la revendication 3, **caractérisé en ce que** l'entretoise (3, 4) au moins au nombre de une est fixée, au niveau de ses extrémités opposées les unes aux autres, respectivement au moyen d'un système d'assemblage par vissage, au niveau du poteau de base et, par ses autres extrémités, au niveau du support pivotant (8).

5. Dispositif de montage selon la revendication 3, **caractérisé en ce que** le support pivotant est pourvu d'une pluralité d'alésages de montage décalés les uns par rapport aux autres le long de sa direction longitudinale principale et servant à ménager l'entretoise au moins au nombre de une ou les deux entretoises (3, 4) dans diverses positions.

6. Dispositif de montage selon la revendication 4 ou 5, **caractérisé en ce que** le support pivotant est pourvu d'un ou de plusieurs trous oblongs servant à ménager l'entretoise au moins au nombre de une ou les deux entretoises (3, 4) dans diverses positions.

7. Dispositif de montage selon l'une quelconque des revendications précédentes, **caractérisé en ce que** l'axe de pivotement (11) est formé par des empreintes estampées de préférence de l'extérieur vers l'intérieur au niveau de parois, se faisant face les unes aux autres, du support pivotant (8).

8. Dispositif de montage selon l'une quelconque des revendications précédentes, **caractérisé en ce que** le poteau de base (1) présente des trous oblongs ou des évidements à la manière de trous oblongs, lesquels constituent le palier d'axe de pivotement.

9. Dispositif de montage selon l'une quelconque des revendications précédentes, **caractérisé en ce que** le poteau de base (1) est réalisé sous la forme d'un poteau de soutien destiné à être planté dans la terre.

10. Dispositif de montage selon l'une quelconque des revendications précédentes, **caractérisé en ce que** le poteau de base (1) et/ou le support pivotant (8) sont réalisés sous la forme de profilés en acier obtenus par roulage.
